# EUROPEAN PATENT APPLICATION

(11) **EP 2 806 249 A2**
(43) Date of publication of application: **26.11.2014**
(21) Application number: 14178606.1
(22) Date of filing: 11.01.2012
(51) Int. Cl.: G01C 21/36, G01C 21/20, H04W 4/02, H04W 4/20

(54) **Non-map-based mobile interface**

(30) Priority: 12.01.2011 US 201161432129 P; 19.04.2011 US 201113089935
(62) Divisional of application: 12701805.9
(71) Applicant: Qualcomm Incorporated, San Diego, CA 92121-1714 (US)
(72) Inventor: Garin, Lionel Jacques, San Diego, CA California 92121 (US); Naguib, Ayman Fawzy, San Diego, CA California 92121 (US); Holm, Eric Kendall, San Diego, CA California 92121 (US); Padovani, Niccolo A., San Diego, CA California 92121 (US); Das, Saumitra Mohan, San Diego, CA California 92121 (US); Blaich, Andrew C., San Diego, CA California 92121 (US)
(74) Representative: Wimmer, Hubert

(57) **Abstract**

Example methods, apparatuses, or articles of manufacture are disclosed herein that may be utilized, in whole or in part, to facilitate or support one or more navigation or positioning operations or techniques using, for example, a non-map-based location or routing interface for use in or with mobile communication devices.

## Description

### BACKGROUND

### Cross Reference to Related Applications

This application claims the benefit of Provisional Application No. 61/432,129, filed January 12, 2011, entitled "Non-Map Based Mobile Interface," which is assigned to the assignee hereof and hereby expressly incorporated by reference herein.

### Field

The present disclosure relates generally to mobile communication devices and, more particularly, to non-map-based location or routing interfaces for use in or with mobile communication devices.

### Information

Mobile communication devices, such as, for example, cellular or satellite telephones, laptop computers, personal digital assistants, electronic book readers, or the like are fast becoming more prevalent in everyday life. These devices may include, for example, a variety of sensors to support a number of applications in today's market. Typically, although not necessarily, these sensors may be capable of converting physical phenomena into analog or digital electrical signals and may be integrated into (e.g., built-in, on-board, etc.) or be external to (e.g., stand-alone, etc.) a mobile communication device. For example, a mobile communication device may feature a camera or video sensor capable of capturing a video image for concurrent or real-time display of such an image in a screen or display, such as a liquid crystal display (LCD), organic light emitting diode (OLED) display, etc. associated with the mobile communication device. In addition, a mobile communication device may also include, for example, one or more inertial or motion sensors (e.g., accelerometers, gyroscopes, compasses, etc.), ambient environment sensors (e.g., ambient light detectors, proximity sensors, thermometers, vibrational sensors, etc.), or other sensors capable of measuring various states, locations, or orientations of the mobile communication device.

Certain mobile communication devices may include, for example, a navigation unit for use with a suitable location-aware or location-tracking application or service. For example, location-aware cellular telephones, smart telephones, or the like may assist users in estimating their geographic locations by providing suitable or desired navigation or positioning information acquired or gathered from various systems. One such system may include, for example, a satellite positioning system (SPS), such as the Global positioning system (GPS) or other like Global Navigation Satellite System (GNSS) capable of transmitting wireless signals to mobile communication devices or other suitable wireless transmitters or receivers, terrestrial or otherwise. In an indoor environment, location-aware mobile communication devices may communicate with each other (e.g., peer-to-peer, etc.) or with one or more location servers using, for example, access points, base stations, etc. so as to estimate relative locations using one or more applicable position estimation techniques, such as trilateration, radio map or heat map signal signature matching, or the like.

Measurement information received from one or more sensors associated with a mobile communication device may be used, for example, in conjunction with navigation information obtained from a suitable or desired location service to help a user to locate a navigation target or otherwise provide a navigation solution. For example, a navigation or location service may supply or furnish a digital electronic map to a mobile communication device from a suitable location server when a user of the device enters a particular area, indoor or otherwise. Typically, although not necessarily, such a map may be displayed in an LCD or like screen or display of a mobile communication device showing its current location, navigation target or desired destination point, if chosen or selected, suggested or feasible navigation route (e.g., via a connecting line, etc.), or the like. At times, however, continually reading or following directions on an electronic map displayed in an LCD or like screen of a mobile communication device may be inconvenient, distracting, or confusing due to, for example, the compact size of the display, zooming or panning-caused disorientation, inadequate orientation cues, lost sense of place, or the like, especially if a map or a navigation route is complex. In addition, map-based navigation may require a user to continuously maintain virtual, spatial, or contextual awareness, thus, increasing attentional demands or the mental workload of the user. Also, for a navigation target that is moving relative to a user, such as a walking friend to be located in a shopping mall, for example, a proposed or suggested navigation route may need to be continuously updated and conveyed to a user by a mobile communication device to potentially increase efficiency or effectiveness of its use. The continuous or otherwise prolonged utilization of a display or screen during, for example, map-based navigation may also increase power consumption of mobile communication devices with limited power resources, thus, affecting operating lifetime of such devices. Accordingly, how to locate a navigation target or convey a navigation solution to a user, as well as how to manage power consumption of a mobile communication device in an effective or efficient manner continues to be an area of development.

### SUMMARY

Example implementations relate to a non-map-based location or routing interface for use in or with mobile communication devices. In one implementation, a method may comprise detecting, at a mobile device, an orientation of such a mobile device relative to a target based, at least in part, on one or more signals received from at least one sensor supported by the mobile device; displaying a captured video image in a camera view of the mobile device while at such an orientation; and overlaying one or more visual indicators over the displayed video image based, at least in part, on a difference between such an orientation and the target, wherein the target is at least partially obscured in the camera view.

In another implementation, a method may comprise determining, at a mobile device, an orientation of the mobile device relative to a pre-determined navigation route; and providing a haptic feedback indication representative of a navigation instruction according to the pre-determined navigation route based, at least in part, on the determined orientation.

In yet another implementation, a method may comprise determining, at a mobile device, a direction of travel of the mobile device relative to a target; and providing a color shown in a display of the mobile device indicative of a closeness of the direction of travel to the target.

In yet another implementation, an apparatus may comprise a mobile device comprising a computing platform coupled to a memory to detect, at the mobile device, an orientation of the mobile device relative to a target based, at least in part, on one or more signals received from at least one sensor supported by the mobile device; display a captured video image in a camera view of the mobile device while at the orientation; and overlay one or more visual indicators over the displayed video image based, at least in part, on a difference between the orientation and the target, wherein the target is at least partially obscured in the camera view.

In yet another implementation, an apparatus may comprise means for detecting, at a mobile device, an orientation of the mobile device relative to a target based, at least in part, on one or more signals received from at least one sensor supported by the mobile device; means for displaying a captured video image in a camera view of the mobile device while at the orientation; and means for overlaying one or more visual indicators over the displayed video image based, at least in part, on a difference between the orientation and the target, wherein the target is at least partially obscured in the camera view.

In one particular implementation, an article may comprise a storage medium having instructions stored thereon executable by a special purpose computing platform to detect, at a mobile device, an orientation of the mobile device relative to a target based, at least in part, on one or more signals received from at least one sensor supported by the mobile device; display a captured video image in a camera view of the mobile device while at the orientation; and overlay one or more visual indicators over the displayed video image based, at least in part, on a difference between the orientation and the target, wherein the target is at least partially obscured in the camera view. It should be understood, however, that these are merely example implementations, and that claimed subject matter is not limited to these particular implementations.

### BRIEF DESCRIPTION OF THE DRAWINGS

Non-limiting and non-exhaustive aspects are described with reference to the following figures, wherein like reference numerals refer to like parts throughout the various figures unless otherwise specified.
FIG. 1 is a schematic diagram illustrating an implementation of a mobile device performing an example navigation or positioning operation.
FIGS. 2 through 5 illustrate implementations of various schematic representations of camera views of a user display.
FIG. 6 is a schematic diagram illustrating an implementation of a mobile device performing an example navigation operation using haptic feedback indications.
FIG. 7 is a flow diagram illustrating an implementation of an example process for performing a navigation or positioning technique.
FIG. 8 is a schematic diagram illustrating an implementation of an example computing environment associated with one or more mobile devices.

### DETAILED DESCRIPTION

In the following detailed description, numerous specific details are set forth to provide a thorough understanding of claimed subject matter. However, it will be understood by those skilled in the art that claimed subject matter may be practiced without these specific details. In other instances, methods, apparatuses, or systems that would be known by one of ordinary skill have not been described in detail so as not to obscure claimed subject matter.

Some example methods, apparatuses, or articles of manufacture are disclosed herein that may be implemented, in whole or in part, to facilitate or support one or more navigation or positioning operations or techniques using, for example, a non-map-based location or routing interface for use in or with mobile communication devices. As used herein, "mobile communication device," "mobile device," "wireless device," "hand-held device," or the plural form of such terms may be used interchangeably and may refer to any kind of special purpose computing platform or device that may be capable of communicating through wireless transmission or receipt of information over suitable communications networks according to one or more communication protocols and that may from time to time have a position or location that changes. As a way of illustration, special purpose mobile communication devices, which may herein be called simply mobile devices, may include, for example, cellular telephones, satellite telephones, smart telephones, personal digital assistants (PDAs), laptop computers, personal entertainment systems, e-book readers, tablet personal computers (PC), personal audio or video devices, personal navigation devices, or the like. It should be appreciated, however, that these are merely illustrative examples relating to mobile devices that may be utilized in connection with one or more non-map-based location or routing interfaces, and that claimed subject matter is not limited in this regard.

As previously mentioned, the above devices, as well as other possible devices not listed, may utilize video sensing technology featuring, for example, a live video image capturing capability. For example, a mobile device may include a camera or video sensor capable of capturing a live video image for concurrent or real-time display of such an image in a screen or display associated with the mobile device, such as a liquid crystal display (LCD), organic light emitting diode (OLED) display, surface-conduction electron-emitter display (SED), or the like. As used herein, "real time" may refer to amount of timeliness of content or information, which has been delayed by an amount of time attributable to electronic communication as well as other information processing. In addition, a mobile device may feature a location-aware or location-tracking capability allowing the device to determine its relative geographic location using applicable position estimation techniques, such as, for example, trilateration, triangulation, heat map or radio map signal signature matching, or the like.

A mobile device may also include a number of sensors, such as an accelerometer, gyroscope, magnetic compass, video sensor, camera sensor, etc. capable of detecting or measuring various states of the mobile device, its location, orientation, or the like, as was also indicated. In this context, "orientation" may refer to a relative placement of a mobile device with respect to some frame of reference having, for example, a fixed point and a reference position. Typically, although not necessarily, an orientation may be defined or specified, at least in part, by one or more angles or vectors relative to a particular direction(s) or point(s), respectively, within an n-dimensional space. By way of example but not limitation, an orientation of a mobile device may be determined, at least in part, using a Cartesian coordinate system for three-dimensional space, just to illustrate one possible implementation. Of course, such details relating to detecting an orientation of a mobile device are merely examples, and claimed subject matter is not limited in this regard.

As illustrated in example implementations described herein, a mobile device may receive or obtain location, navigation, identification, or other information with respect to a suitable or desired navigation target and may display such information, in whole or in part, in a screen or display associated with the mobile device. For example, in an implementation, target-related information may be displayed, at least in part, in the form of visual cues or indicators overlaid or superimposed over a captured image of a physical real-world environment concurrently shown in a camera view of a mobile device, as described below. As used herein, a "navigation target," which may herein be called simply a "target," may refer to any object or area of interest to be located, identified, or the like. In some instances a target may comprise, for example, a person carrying a location-aware mobile phone or like navigation device, a building or shopping mall, a store or outlet in a shopping mall, a destination point identifiable over a digital map, a navigation route, pre-determined or otherwise, and so forth.

As will be described in greater detail below, a user may place a mobile device in a certain orientation recognizable or detectable, for example, by one or more on-board sensors, such as a magnetic compass, accelerometer, gyroscope, camera or video sensor, or the like. A user may point a mobile device in various directions or may scan the horizon or surrounding environment utilizing, for example, an on-board video sensor, thus, capturing and concurrently displaying a live video image of a real-world environment in a screen or display associated with the mobile device. As used herein, "scan" or "scanning" may refer to an operation or technique of systematically or continually moving a mobile device in a suitable or desired direction, such as left, right, up, down, or the like, while the mobile device is in a certain orientation, for example, so as to locate, identify, etc. a target. For example, while scanning, a user may pan or otherwise move a mobile device in various directions examining a captured video image concurrently displayed in a camera view in a screen or display of the mobile device until a target comes into a user's field of view in the screen or display, just to illustrate one possible implementation.

Continuing with the above example, having detected its orientation and using knowledge of its current location and an estimated location of a target, a mobile device may go through a process of locating, identifying, etc. such a target and conveying target-related information to a user using, at least in part, a non-map-based location or routing interface. For example, a mobile device may locate, identify, etc. a target, compute a distance or range to such a target, suggest a navigation route, or the like and may augment a camera view of the mobile device with target-related information in the form of visual cues or indicators. It should be appreciated that in certain example implementations, a user may try to locate a target by using, at least in part, a searchable point-of-interest (POI) database, for example, in connection with a particular location, indoor or otherwise, or, optionally or alternatively, a suitable or desired browser-deployed application associated with a search engine information management system (e.g., Google, Bing, Yahoo!, etc.). As described below, visual cues or indicators may be representative of navigation instructions comprising, for example, one or more arrows, labels, icons, photographs, etc. overlaid or superimposed over a live video image of a real-world environment shown in a camera view in a screen or display of a mobile device. In an implementation, navigation instructions or other target-related information may be conveyed to a user, in whole or in part, using haptic technology, for example, in the form of tactile signals or indications, such as vibrations, shaking, or like motions perceptible by touch, as will also be seen. In addition, in one particular implementation, navigation instructions or other target-related information may also be conveyed utilizing any suitable or desired visual alerts, such as on-screen flashing or blinking of a particular color-coded indicator(s) proposing or suggesting a navigation solution, route, turn, direction, or the like.

As previously mentioned, a location-aware mobile device may estimate its relative geographic location using applicable position estimation techniques. For example, a mobile device may estimate its location based, at least in part, on wireless signals received or acquired from an SPS or, in some instances, a location server via a cellular telephone or other wireless communications networks. In one particular implementation, received signals may be processed by a mobile device and its location may be estimated, for example, via a trilateration operation, wherein a mobile device may utilize point-to-point distances or ranges measured from such a mobile device to a number of wireless transmitters positioned at known fixed locations. A range to a wireless transmitter may be estimated, for example, by acquiring a Media Access Control identifier (MAC ID) address from signals received from such a transmitter and measuring one or more detectable characteristics of received wireless signals, such as signal strength, round-trip delay, or the like. Of course, details relating to range estimation techniques are provided merely as examples, and claimed subject matter is not so limited. For example, in one particular implementation, a mobile device may be capable of determining a range utilizing, at least in part, a range-finding sensor, built-in or otherwise. Here, a range-finding sensor may be realized, for example, as an emitter and a receiver to respectively emit and receive sound, light, infrared, radio frequency-based, or like energy, a time module to determine a propagation time of the emitted energy as it travels to and from a target or other object, and a processor to determine a range to the target or other object, just to illustrate another possible implementation.

Optionally or alternatively, a position of a mobile device may be estimated using a heat map or radio map signature matching technique, for example, in which one or more characteristics of wireless signals or signal signatures received at a mobile device are compared with expected signatures of such characteristics stored as heat map values in a suitable database. Here, for example, individual signal signatures stored in a database may be associated, at least in part, with one or more particular locations. Particular locations may refer, for example, to one or more previously measured, estimated, approximated, predicted, simulated, etc. locations that may be associated with a stored expected signature of one or more observed characteristics of received wireless signals. Observed characteristics of received wireless signals may comprise, at least in part, received signal strength indicator (RSSI), round-trip time (RTT) or round-trip delay (RTD), etc., just to name a few examples. By finding a signature in a database that most closely matches characteristics exhibited by wireless signals received at a mobile device, a location associated with a matching signature may be used as an estimated location of a mobile device. Of course, details in connection with position estimation techniques are merely examples, and claimed subject matter is not limited in this regard.

As mentioned above, a mobile device may also obtain a sufficiently accurate position estimate or position fix with respect to a target using any of several position estimation techniques. For example, in one particular implementation, a centralized entity, such as a location-based service may obtain, manage, maintain, etc. location or other information with respect to participating mobile devices and may make such information available upon request, on-demand, or the like. To illustrate, one or more mobile devices including devices representative of or otherwise associated with a target, mobile or otherwise, may participate in, subscribe to, or otherwise be associated with a particular location-based service, for example. Accordingly, participating devices may receive or process one or more navigation signals allowing such devices to estimate their current locations using one or more known techniques, such as techniques described above (e.g., trilateration, triangulation, heat map signal signature matching, etc.). Location or other related information with respect to these devices may be collected or stored in some manner in a suitable or desired database, such as a location database associated, for example, with a centralized location-enabling server. As such, a particular mobile device may obtain information regarding an estimated position of one or more other participating devices, mobile or otherwise, representative of or otherwise associated with a target, for example, through accessing such a server. Optionally or alternatively, a location-based service may provide to a mobile device one or more wireless signals descriptive of a current position of a target in the form of a latitude, longitude, altitude, for example, upon a positioning request or when the target changes its location, just to illustrate another possible implementation. It should be noted that a location-based service may be capable of checking or verifying privacy settings of a mobile device, target, or other participating devices in terms of location-sharing or the like prior to providing location estimates, as will be described in greater detail below. For example, in one particular implementation, a location-based service may request that a user of a mobile device or target agree to share a current location before such a user or target can participate in, subscribe to, or otherwise utilize the location-based service. Of course, such details relating to obtaining position estimates with respect to a mobile device, target, etc. or to privacy settings or controls are merely examples, and claimed subject matter is not so limited.

In certain implementations, a mobile device may obtain an estimate of a current location of a target using, for example, one or more peer-to-peer communication techniques. Typically, although not necessarily, peer-to-peer communications may refer to a type of communications in which peers or nodes of partially or substantially equal roles or capabilities may exchange information or services directly with each other. For example, a peer, such as a mobile device or a device representative of or otherwise associated with a target, may detect the presence of one or more other peers and may share location, configuration, service, network, or other information with such peers. Thus, in one particular implementation, location information may be initially estimated, at least in part, at a peer by a suitable or desired on-board navigation unit, for example, using one or more position estimation techniques, such as one or more techniques described above. A peer, such as a mobile device may then communicate a positioning request to another peer, such as a target, for example, and the target may provide the requesting mobile device with its current location information using any suitable communication format, such as instant messaging signaling format, just to illustrate one possible implementation. It should be noted that location information may be updated or communicated continually or, optionally or alternatively, periodically, such as, for example, when a target changes its position with respect to a mobile device. Accordingly, here, location or other information may be sent directly from peer to peer bypassing a centralized location-enabling server, thus, allowing for relatively independent position estimations with respect to a target. It should be noted that peers may be capable of enabling suitable or desired privacy settings or controls with respect to location-sharing or the like, thus, allowing certain peers to maintain their privacy, if desired. Of course, details relating to peer-to-peer position estimation techniques are merely examples, and claimed subject matter is not so limited.

As was indicated, typically, although not necessarily, navigation or other target-related information may be displayed in a screen or display associated with a mobile device in conjunction with a digital electronic map supplied by a suitable location-based service. For example, a digital map may pinpoint or show a current location of a mobile device, an estimated location of a target, a suggested navigation route from the mobile device to the target via a connecting line, or the like. At times, however, reading or following directions on a digital map shown in a display of a mobile device may be inconvenient, distracting, cumbersome, confusing, etc. due to, for example, the compact size of the display, zooming or panning-caused disorientation, inadequate map-reading skills or orientation cues, lost sense of place, or the like, especially if a map or a navigation route is complex. In addition, map-based navigation may, for example, require a user to continuously or concurrently maintain virtual, spatial, or contextual awareness, which may increase attentional demands or the mental workload of the user.

In some instances, for a target that is obscured by or hidden behind an obstacle, such as a friend to be located in a crowded shopping mall, for example, or, optionally or alternatively, a target that is moving or traveling relative to a user of a mobile device, conventional navigation solutions may be less than adequate or useful. For example, at times, a suggested map-based navigation route may not sufficiently reflect or account for a continuous change in a target's position in order for a user to effectively or efficiently navigate toward or otherwise catch up with such a moving or traveling target. In addition, at times, a user of an augmented reality-based application may miss or otherwise not be able to locate or even notice a target despite the target being in sufficiently close proximity to the user so as to be captured, for example, in a camera view of the user's mobile device due to some obstacle(s) present in a line of sight (LOS) or direct view of the user. Here, for example, a target may be obscured by or otherwise hidden behind an object, such as another person(s) standing in a user's direct view of the target, some structural element, such as a wall of a particular shop, building, etc., just to name a few examples. Accordingly, it may be desirable to develop one or more methods, systems, or apparatuses that may facilitate or support one or more navigation or positioning operations using, at least in part, a non-map-based location or routing interface associated with a mobile device to allow, for example, for an obscured target to be located, identified, etc. in an efficient or effective manner.

As described below, in an implementation, a mobile device may, for example, help a user to locate, identify, etc. a target that is obscured or otherwise hidden behind an obstacle using, at least in part, a camera view showing a live video image of a physical real-world environment. For example, an obscured target may be located, identified, etc., at least in part, by one or more visual cues or indicators overlaid or superimposed over such an image in a camera view shown in a screen or display of a mobile device. By way of example, visual cues or indicators may comprise, at least in part, one or more arrows overlaying an obscuring obstacle, such as a wall, for example, and capable of pointing in the direction of a target so as to sufficiently communicate or convey to a user a location of the target or suggest a navigation solution for locating the target. Accordingly, using, at least in part, a camera view shown in a screen or display, a mobile device may help a user to locate, identify, or otherwise provide an indication of whereabouts of a target in an effective or efficient manner, even though the user may not be able to directly view or see the obscured target, in the camera view or otherwise. Of course, such details related to locating an obscured target are merely examples, and claimed subject matter is not limited in this regard.

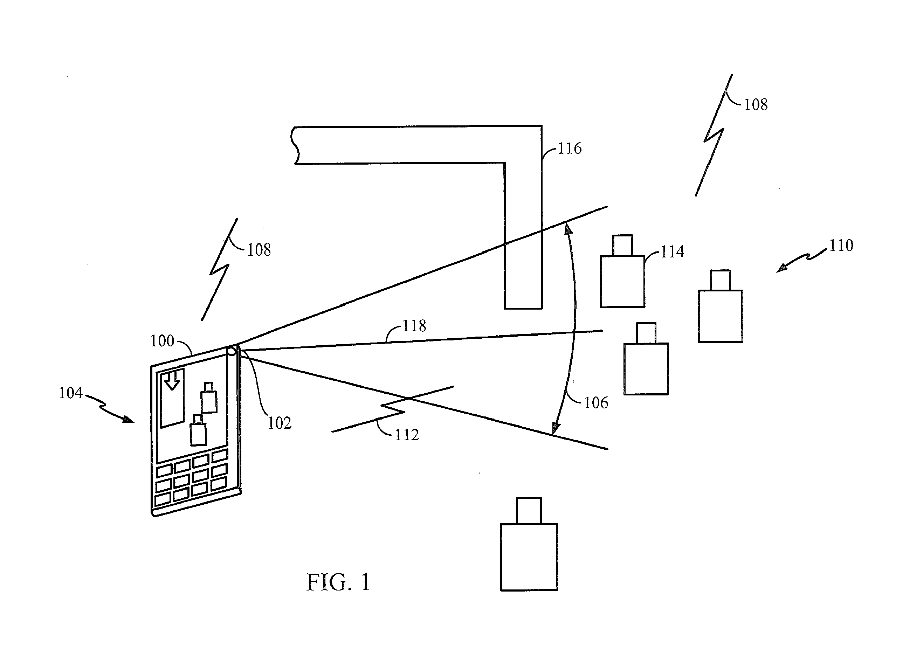

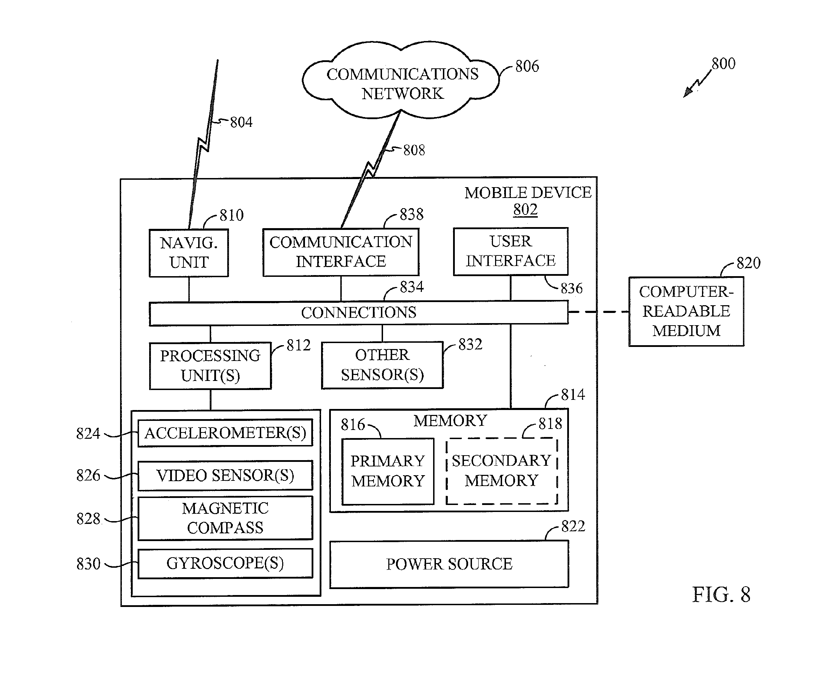

FIG. 1 is a schematic diagram illustrating an implementation of a location-and-orientation-aware mobile device 100 performing an example navigation or positioning operation or technique using a non-map-based location or routing interface. Here, mobile device 100 may comprise an image capturing device 102, such as a two-dimensional or three-dimensional camera, for example, a video sensor, or the like capable of capturing a live video image for concurrent or real-time display of such an image in any suitable screen or display, such as an LCD, indicated generally at 104. Although not shown, mobile device 100 may also comprise one or more sensors (e.g., inertial, magnetic, etc.) and a special purpose processing unit to facilitate or support an operation of one or more applications, augmented reality-based, or otherwise, hosted on mobile device 100 so as to provide, for example, one or more non-map-based navigation solutions, as described below. Certain functional features of an example location-and-orientation-aware mobile device, such as, for example, mobile device 100 will be described in greater detail with reference to FIG. 8. In this illustrated example, LCD 104 may be used as a viewfinder for image capturing device 102, for example, defining a field of view or image boundary, indicated generally by a double-sided arrow at 106. As illustrated generally by a number of lightning bolt-shaped symbols 108, one or more wireless signals may be provided, at least in part, from a suitable SPS, location server, or the like. Here, for example, wireless signals 108 may be provided for use by mobile device 100 or one or more targets, indicated generally at 110 to facilitate or support location-based services using one or more techniques described above. In certain implementations, mobile device 100 and one or more targets 110 may be capable of communicating using one or more peer-to-peer communication links, such as a link 112, for example, to allow for a sufficiently accurate position fix via suitable peer-to-peer communication techniques, as was also indicated.

As previously mentioned, not all targets may be in a user's line of sight (LOS) or direct view so as to be visibly displayed in LCD 104 of mobile device 100. To illustrate, a particular target, such as an object of interest 114, for example, may be included within a field of view or image boundary 106 (e.g., during aiming, scanning, etc.) but may, nevertheless, be obscured by or hidden behind an obstacle or other object, such as another person(s) in a crowded shopping mall or some structural element, such as a wall, depicted generally at 116. In such a case, as described below, object 114 may be located, identified, etc. by one or more visual cues or indicators, such as an arrow overlaying wall 116 in a camera view and pointing in the direction of object 114, for example, to convey that object 114 is hidden behind wall 116, just to illustrate one possible implementation. Of course, such details are merely examples, and claimed subject matter is not so limited.

In operative use, a user may place mobile device 100 in a particular orientation, which may be detected, at least in part, by a suitable camera or video sensor utilizing, for example, an optical axis of camera lens, as schematically represented by a dashed line at 118, just to illustrate one possible implementation. It should be noted that orientation of mobile device 100 may be determined, at least in part, in relation to any suitable coordinate system, such as, for example, a local or user-centric coordinate system in which the origin or center of coordinates is fixed to and moves with a mobile device or user, though claimed subject matter is not so limited. Optionally or alternatively, a global reference system utilizing, for example, a geo-centric or Earth-centered system of coordinates may be used. In addition, any suitable relative coordinate system may be employed, wherein an axis of a reference frame may be fixed to or aligned with some structural element of a particular building, such as a hallway, corridor, etc. in a shopping mall. In some implementations, a coordinate system may define dimensions that are mutually orthogonal. Of course, such details relating to coordinate systems that may be utilized in connection with determining an orientation of a mobile device are merely examples, and claimed subject matter is not limited in this regard.

Following the above discussion, to locate object 114, a user may place mobile device 100 in a particular orientation and may point or aim associated image capturing device 102 toward a particular area, structure, object, etc. or, alternatively, may perform a quick scan of the horizon concurrently viewing in LCD 104 a live video image of a physical real-world environment. Using position information of mobile device 100 as well as object 114 and applying an orientation detection process by computing, for example, an orientation vector aligned with optical axis 118, mobile device 100 may help a user to locate object 114 when object 114 comes into a field of view of a camera or crosses image boundary 106, just to illustrate one possible implementation. Here, for example, mobile device 100 may overlay one or more visual cues or indicators over object 114 shown in LCD 104 to locate, identify, or provide suitable or desired target-related information to a user. It should be noted that in certain implementations an orientation of mobile device 100 may be determined, at least in part, via one or more inertial sensors, for example, performing a measurement activity in relation to the gravity vector in a three-dimensional Cartesian coordinate space. Optionally or alternatively, a magnetic sensor, such as a magnetic compass, for example, may be employed to provide heading information utilizing the Earth's magnetic field to calculate a measure of orientation of device 100. Of course, these are merely examples of how a mobile device may determine its orientation, and claimed subject matter is not so limited.

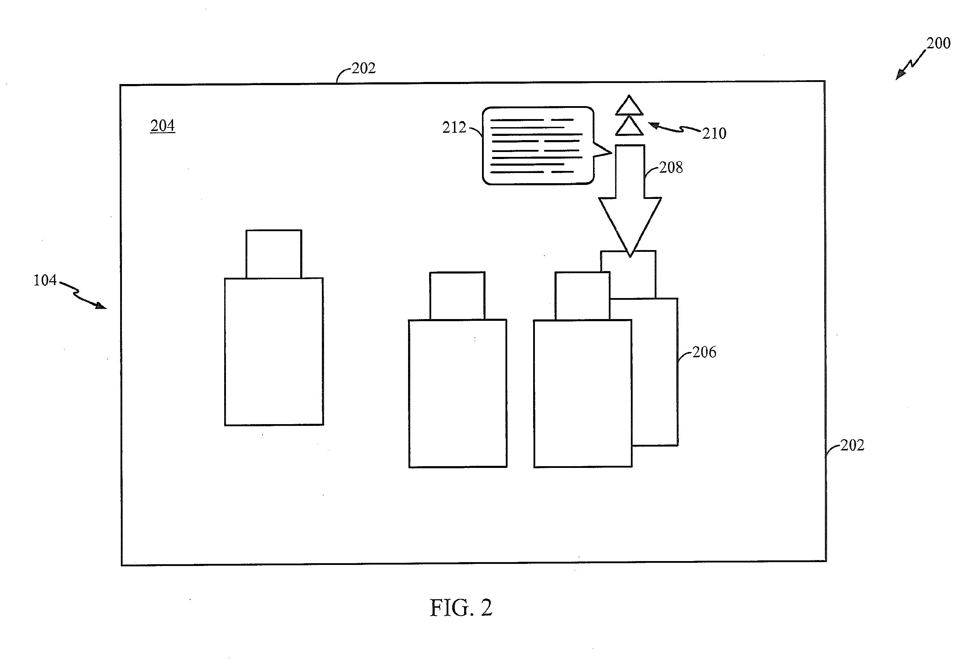

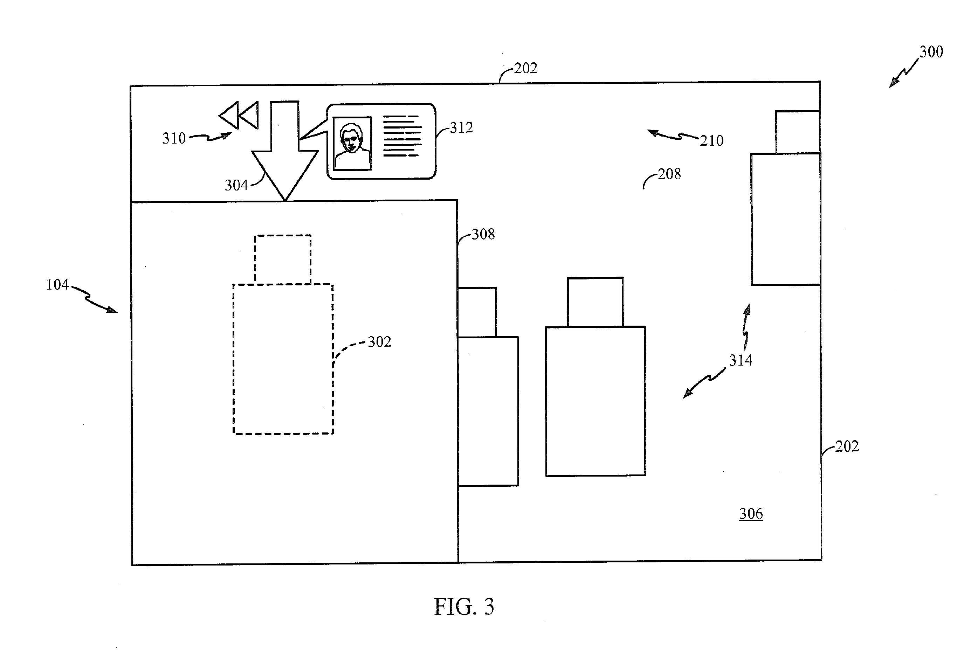

FIGS. 2 - 5 illustrate schematic representations of various camera views of a user display, such as LCD 104 of FIG. 1, for example, and an associated non-map-based location or routing interface of mobile device 100, which may be realized as a location-and-orientation-aware smart telephone, according to an example implementation. These figures may illustrate example video images, targets, etc. captured or to be captured in a camera view in connection with one or more non-map-based navigation operations, though claimed subject matter is not limited to such example images, targets, etc., of course. In addition, to simplify discussion, features of mobile device 100 or camera views shown in FIGS. 1 - 2 that correspond to like features or camera views illustrated in FIGS. 3 - 5 are given the same reference numbers, where applicable.

In this illustrated example, edges 202 of a camera view 200 may define an image boundary, such as image boundary 106 of FIG. 1, for example, corresponding to a user's field of view in LCD 104. As seen, LCD 104 may show a video image 204 of a physical real-world environment (e.g., a group of people, etc.) concurrently displayed within a user's field of view resulting from a user's placing mobile device 100 in a particular orientation and, for example, performing a scan to locate a target, as previously mentioned. It should be appreciated that, although not shown, LCD 104 may include other information, such as a light level, battery power, signal reception, zoom level, heading or compass readings, tilt level, or the like. As seen, displayed in the background of video image 204 may be a partially hidden or obscured target, such as an object of interest 206 located, identified, etc. by one or more visual cues or indicators, such as a down arrow 208, for example, overlaid or superimposed over video image 204, just to illustrate one possible implementation. It should be noted that the size of down arrow 208 may correlate to the distance or range to object of interest 206 meaning that down arrow 208 may change its size depending on a proximity or how close or near object of interest 206 is to a user's estimated location (e.g., the closer the distance, the larger the arrow, etc.). It should also be appreciated that a distance or range from mobile device 100 to object of interest 206 may be represented via any suitable or desired visual indicator displayed, for example, in LCD 104. Although not shown, such a visual indicator may comprise, at least in part, a numerical or textual description, for example, of how far away object of interest 206 is from mobile device 100 using any suitable metrics (e.g., meters, feet, etc.), though claimed subject matter is not so limited. Also, a distance or range may be correlated with the direction to object 206 in some manner, such as by displaying, for example, the distance to object 206 if a user is to navigate toward the object in the suggested direction and the distance to object 206 if a user is to navigate toward object 206 in an alternative direction. Of course, claimed subject matter is not so limited.

In one implementation, down arrow 208 may, for example, be color-coded so as to indicate or convey to a user the direction in which object 206 is moving or traveling, for example, relative to a location of the user of a mobile device, if applicable or desired. For example, a mobile device may employ colors based, at least in part, on a notion of providing sufficiently contrasting colors to differentiate between or sufficiently convey (e.g., visually, etc.) a number of possible directions of object 206. Such color contrasts may be user-selectable, for example, or may be based, at least in part, on random color computations or assignments by a computing platform associated with a mobile device. By way of example but not limitation, down arrow 208 may be assigned the color green, for example, to indicate that object 206 is moving or traveling toward a user, the color red to indicate that object 206 is moving or traveling away or in the opposite direction from a user, the color yellow to convey that object 206 is moving to the side (e.g., walking to the left, etc.) of a user, or the like. As such, a non-map-based mobile interface may help a user to estimate or anticipate where object 206, such as a friend in a crowded shopping mall, for example, is moving or going to, thus, allowing such a user to adjust his or her route to efficiently or effectively navigate toward or catch up with the friend. Of course, such details relating to color assignments are merely examples, and claimed subject matter is not limited in this regard.

Optionally or alternatively, information with respect to a direction in which object of interest 206 is moving or traveling may be conveyed or otherwise communicated to a user via a double arrow 210, for example, overlaid or superimposed over video image 204, just to illustrate another possible implementation. It should be appreciated that double arrow 210 may be color-coded using various color assignments so as to enhance a user's experience by providing, for example, a convenient or simple-to-understand non-map-based interface allowing such a user to comprehend a suitable or desired navigation solution, as described above. As also illustrated, object of interest 206 may be labeled or visually commented on in some manner, such as, for example, by a semi-transparent comment or label 212. Label 212 may include object-related information, such as an object's name, contact details, range or distance to such an object, or the like that may be relatively short or otherwise sufficient (e.g., partially shown, etc.) to fit in an information field of label 212. Such object-related information may be stored, for example, on a computing platform associated with mobile device 100 (e.g., in a contact list, suitable database, etc.), an electronic content management server on a suitable network, a location or tracking server, etc. accessible via a LAN, a WAN, the Internet, or the like.

In this illustrated example, a user may touch, tap, click on, or otherwise select label 212 via a touch screen, mouse, keypad, etc., for example, to expand or view a larger-size rendition of label 212 providing additional details regarding object 206, if desired. In one particular implementation, while viewing such a rendition, a user may edit or configure object-related information, such as, for example, add or change contact details, modify names or designations, or the like. In addition, label 212 or a larger-size rendition of such a label may provide a user with one or more options to suitably communicate with object of interest 206, for example, by placing a phone call, sending an e-mail or text message, or the like. As a way of illustration, a user may touch or tap on object-related contact information, such a phone number, e-mail address, etc. shown on label 212, which may result in mobile device 100 placing a call, sending an e-mail or text message, etc. to a computing platform associated with object 206, just to illustrate one possible implementation. Also, tapping twice, for example, on object-related information shown on label 212 may bring up or display a drop-down or like menu with user-selectable options for communicating with object 206 in a suitable or desired manner, as another possible implementation. Optionally or alternatively, mobile device 100 may be configured or otherwise be capable of communicating with object 206 by, for example, dialing a certain number or sending a particular e-mail or text message (e.g., "I am nearby, R U available to meet?", "HMU" as in "Hit Me Up," etc.) with limited attentional demands or user-device interaction. For example, mobile device 100 may be configured by a user, location-based service, etc. to communicate with object 206 when object 206 is located, identified, captured in camera view 200, etc. or after a certain time window or interval (e.g., 5, 10, etc. seconds, etc.) after object 206 is located, identified, captured in camera view 200, etc. Of course, such details relating to communicating with object of interest 206 are merely examples, and claimed subject matter is not so limited.

As previously mentioned, a target may be obscured by or otherwise hidden behind an obstacle or some object, which may include, for example, other persons, structural elements of a building, such as walls, doors, or the like. As illustrated in FIG. 3, an obscured target, such as an object of interest, indicated in a dashed line at 302, may be located or identified by visual cues or indicators, such as a down arrow 304 capable of pointing to or directing a user's attention toward a location of object 302. Here, for example, down arrow 304 may overlay a live video image 306 and point to object 302 in a manner sufficient to indicate that object of interest 302 is currently obscured by or hidden behind an obstacle, such as a wall 308, as illustrated. In certain implementations, down arrow 304 may be color-coded, may change colors, blink, etc. so as to draw a user's attention to the fact that object of interest 302 is currently not in a user's LOS or direct view so as to be visibly displayed in LCD 104. Optionally or alternatively, arrow 304 may comprise a three-dimensional rendering capable of being directed or pointed to object 302 in a manner sufficient to indicate or convey to a user that object 302 is hidden behind a particular obstacle, such as, for example, wall 308, as described below. Of course, such details relating to locating, identifying, etc. an obscured target are merely examples, and claimed subject matter is not so limited.

Following the above discussion, here, the larger size of down arrow 304 may convey to a user that object of interest 302 is nearby or in a relatively close proximity to such a user, and a double arrow 310 may further indicate the object's direction of travel, as discussed above. In this illustrated example, a label 312 providing object-related information may include, for example, a photograph or personalized image of object 302 (e.g., an avatar, portrait, icon, etc.) or other suitable or desired object-related information, as was also indicated. In one particular implementation, instead of or in addition to a photograph, icon, etc., label 312 may include information in a suitable video format, such as a video clip embedded in label 312 audibly providing object-related information, such as reading out loud a name, phone number, etc., though claimed subject matter is not so limited. This may be implemented, at least in part, via a voice output using, for example, assistive text-to-speech (TTS) or like technology. As also illustrated, video image 306 may comprise, for example, other objects of a physical real-world environment, such as other persons in a shopping mall, etc., indicated generally at 314, which may be included in camera view 300 but may not be of a current or particular interest to a user.

In certain example implementations, one or more mobile devices or potential targets may be provided with an option to accept or reject sharing their current location or other target-related information, thus, allowing such mobile devices or targets to maintain their privacy, if desired. For example, a user who wishes not to share his or her current location may select "currently unavailable" status or option using any suitable routines or operations that may be facilitated or supported by a computing platform associated with a mobile device. To illustrate, a mobile device may, for example, allow a user to input or enter a location-sharing status with respect to a particular time of day, specific locations, persons, or the like into an input line or to select a suitable privacy setting from a list of drop-down options. In addition, a mobile device may be capable of keeping its location visible to certain people selected or approved by a user, such as close friends, family members, etc., for example, but not other people, such as an employer, co-workers, etc. A user may also be capable of switching his or her location-sharing availability on or off depending on the current desire for privacy, just to illustrate another possible example. Of course, such details relating to privacy settings are merely examples, and claimed subject matter is not limited in this regard.

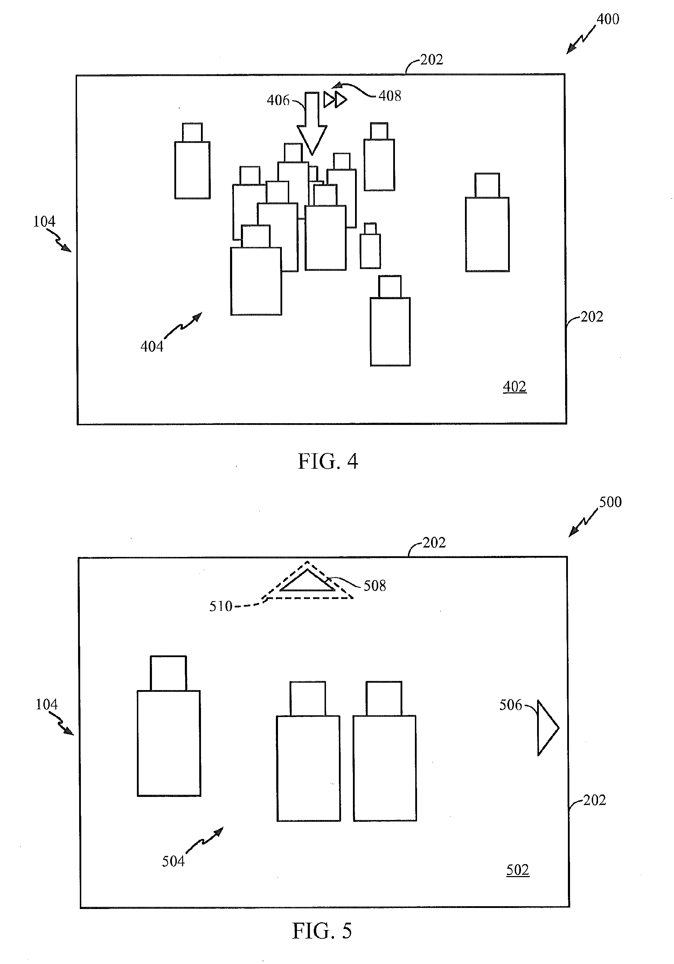

Continuing now with FIG. 4, which is a schematic diagram illustrating an example representation of a camera view 400 comprising, for example, a video image 402 of a physical real-world environment 404 displayed in LCD 104, wherein an example non-map-based navigation technique is performed in the context of a dynamic meeting place. As a way of illustration, a group of users may wish to meet in an area, such as a shopping mall, for example, which may be unfamiliar to some or all users or for which no specific location-related details or instructions were given or provided (e.g., "Let's meet in the Washington Square mall," etc.). Here, for example, such a group of users may agree to share their current locations with each other and try to locate one another in a dynamic fashion, such as by identifying suitable or desired targets in a camera view via LCD 104 and trying to meet or catch up with them, as discussed above. Optionally or alternatively, group members may designate a particular user as a guide responsible for selecting or determining an appropriate meeting place. Using LCD 104 of associated location-and-orientation-aware mobile devices as virtual pointers, for example, group members may perform relatively quick scans toward open or common mall areas (e.g., cafes, food courts, etc.) to initially sense the general direction of a guide (or other members) and may subsequently go through a process of locating the guide. Here, for example, visual cues or indicators generated by mobile device 100 may convey that a guide is substantially obscured by or hidden behind other objects, such as other persons in a mall, as illustrated by a down arrow at 406. A double arrow 408, for example, as well as the smaller size of down arrow 406 may also convey to a group member utilizing LCD 104 that a guide is walking to the left of such a group member in a relatively substantial distance, just to illustrate one possible implementation. Accordingly, in this context, a non-map-based location or routing interface may help a group member(s) to solve, in whole or in part, a navigation discrepancy that may arise with respect to a meeting place. As also illustrated, a target-related comment or label or other visual cues or indicators may be selectively omitted from being displayed next to down arrow 406 in LCD 104 so as to avoid, for example, a cluttered or confusing display. Optionally or alternatively, a label, cue or indicator, comment, etc. may be displayed in any suitable or desired portion of LCD 104. Of course, such details of camera view 400 are provided as merely examples, and claimed subject matter is not limited in this regard.

FIG. 5 is a schematic representation of a camera view 500 shown in a user display, such as LCD 104 of FIG. 1, for example, when a target is not yet located, identified, etc. or otherwise captured in camera view 500, according to an example implementation. As previously mentioned, a user may scan a physical real-world environment to locate a target using, for example, LCD 104 by placing a mobile device in a certain orientation recognizable or detectable by a suitable sensor and examining a concurrently displayed live video image of such an environment. While watching a live video image in LCD 104, a user may, for example, pan or aim a mobile device in various directions until a target comes into a user's field of view or crosses an image boundary, such as image boundary 106 of FIG. 1. Subsequently, a mobile device may overlay one or more visual cues or indicators over a captured live video image in LCD 104, for example, so as to efficiently or effectively locate, identify, etc. a target, as previously mentioned.

Following the above discussion, during aiming or scanning, LCD 104 of a location-and-orientation-aware mobile device may concurrently display a live video image 502 comprising a physical real-world environment, which may include, for example, background imagery or objects that may not be of a particular interest or pertinent to a user (e.g., other persons, etc.), indicated generally at 504. Here, for example, in the absence of a target in camera view 500 (e.g., not yet captured, etc.), a mobile device may generate one or more visual cues or indicators, such as triangle-shaped arrows 506, 508, or the like overlaying video image 502 to provide a user with routing or navigation instructions for locating such a target. In this illustrated example, a rightwards arrow 506 may indicate or convey to a user, for example, that a target is located to the right of such a user, thus, prompting the user to pan or aim a mobile device in the instructed or suggested direction. Likewise, although not shown, a leftwards arrow may instruct a user to aim or pan a mobile device to the left so as to locate, identify, etc. a target in camera view 500 via LCD 104, as another possible example.

In certain instances, a target may be positioned in a different level or spatial plane with respect to a user, such as in a different floor of a shopping mall, house, etc., for example, or in a balcony, overpass, podium, or the like. As a result, mobile device 100 may generate a visual cue or indicator, such as a triangle-shaped upwards arrow 508, for example, to convey that a target is currently positioned above a user, just to illustrate one possible implementation. As such, a user may adjust his or her navigation efforts accordingly by changing, for example, the direction of scanning or otherwise moving or shifting the location efforts onto another floor. Similarly, a downwards arrow (not shown) may convey to a user that a target is currently located on the floor below such a user, thus, allowing the user to locate the target by following navigation instructions using LCD 104. Of course, LCD 104 may include other visual cues or indicators, arrow-shaped or otherwise, such as a leftwards arrow or a text, for example, conveying or communicating navigation instructions to a user.

It should be appreciated that arrows 506, 508, or other cues or indicators not shown may be color-coded using, for example, color assignments discussed above or any other suitable or desired color palette to indicate or convey the direction in which a target is moving or traveling, just to illustrate another possible implementation. In addition, as also discussed above, the size of arrows 506, 508, etc. may change depending on how close or near a target is to a user's current location, as schematically illustrated in a dashed line at 510. Also, in certain implementations, any suitable or desired number or combination of arrows may be displayed to facilitate or support one or more navigation instructions in connection with performing one or more positioning operations using a non-map-based location or routing interface. For example, upwards arrow 508 and rightwards arrow 506 may be displayed concurrently, which may indicate that a target is located above and to the left of a user, thus, making scanning efforts of such a user more precise. Optionally or alternatively, although not shown, a single triangle-shaped arrow, such as an upper-right-corner arrow, lower-left-corner arrow, or the like, for example, may be displayed in LCD 104 to convey a location of a target. It should be appreciated that these as well as other arrows not listed or illustrated may be capable of pointing toward any suitable or desired direction in LCD 104 so as to sufficiently convey navigation instructions to a user. It should also be noted that some or all of visual cues or indicators discussed in the context of the present disclosure may be generated using two-dimensional (2D) or three-dimensional (3D) graphics. For example, one or more down arrows, such as down arrows of FIGS. 3-4 may comprise 3D renderings capable of sufficiently communicating or conveying to a user that a target is obscured by or hidden behind an obstacle or some object, such as another person, structural element, or the like, as was indicated. Of course, these are merely examples to which claimed subject matter is not limited.

In one particular implementation, instead of or in addition to an arrow(s) indicating or suggesting the direction of scanning or navigating (e.g., arrows 506, 508, etc.), a mobile device may provide or change a color on a display, such as LCD 104, for example, if the mobile device is being panned or aimed closer toward or further away from a target. By way of example but not limitation, LCD 104 may change a color from red to blue using a "hot - cold" metaphor to convey that a mobile device is getting "hotter" or "colder" in terms of the direction to locate a target. Here, such a metaphor implemented in connection with a non-map-based mobile interface may advantageously take into account a user's natural intuition for the effects that his or her scanning or like motions may have on the process of determining an effective or efficient navigation solution. Of course, such details are merely examples, and claimed subject matter is not limited in this regard.

As was indicated, certain position or routing information may be conveyed or communicated to a user via one or more suitable or desired haptic feedback indications representing, for example, navigation instructions for locating a target or otherwise directing or routing a user toward the desired destination or goal. Here, haptic feedback indications may be provided, for example, in any suitable form, such as vibrations, shaking, or like motions perceptible by a user's sense of touch. Accordingly, in one particular implementation, a mobile device may feature a haptic or tactile sensory technology, such as one or more vibration systems, for example, placed on one or more sides, corners, or other surfaces of a mobile device. It should be appreciated that vibration systems may be placed on a mobile device strategically (e.g., on the opposite sides, etc.) so as to sufficiently convey or communicate to a user navigation instructions including, for example, the direction of travel, panning, aiming, etc., depending on the particularities of a navigation task at hand.

According to aspects of the above discussion, if a target is not captured or otherwise present in a user's field of view, as illustrated in FIG. 5, for example, a mobile device may provide the user with navigation instructions in the form of suitable or desired haptic feedback indications, as previously mentioned. Navigation instructions may comprise, for example, tactile signals, such as vibrations on the left, right, upper, or lower sides of the mobile device to indicate that the user is to respectively pan or aim the mobile device left, right, up, or down to capture a target in LCD 104, just to illustrate one possible implementation. Also, a mobile device may be capable of providing certain haptic signal indications, such as a certain type or number of vibrations, etc. to indicate, for example, when a target is captured in LCD 104, thus, allowing a user to stop panning, moving, aiming, etc. so as not to miss or pass over the target, just to illustrate another possible implementation. It should be appreciated that haptic feedback indications may be utilized instead of or in addition to visual cues or indicators to facilitate or support one or more operations or processes associated with location, identification, etc. of a target.

In an implementation, a user may input or enter (e.g., via a mobile device, location service, etc.) a desired destination point, and a mobile device may, for example, compute or otherwise determine a suitable navigation route from a user's current location to such a destination point using one or more known techniques. A user then may travel toward a destination point, and a location-and-orientation-aware mobile device may track the user's path and determine whether the user is traveling in a manner consistent with a pre-determined navigation route using, for example, position estimation techniques discussed above. While traveling along a pre-determined navigation route, a user may encounter, for example, a number of junctions, turns, intersections, stops, etc. requiring such a user to choose or select the direction of travel by deciding whether to turn left, right, continue going straight, or the like. As previously mentioned, continually reading or following a digital map shown in a display of a mobile device may be inconvenient, distracting, confusing, etc. for certain users, such as users with poor or inadequate eyesight due to, for example, a compact size of a display, inadequate backlight or ambient environment lighting, complexity of a route or map, or the like. Accordingly, in certain implementations, a mobile device may be configured (e.g., by a user, location-based service, etc.) to provide a user with navigation instructions using haptic feedback indications, thus, guiding or directing such a user toward a desired destination via a pre-determined navigation route. In addition, selective employment of haptic feedback indications instead of continuous use of a display during navigation may, for example, reduce power consumption of mobile devices with limited power resources (e.g., battery-operated, etc.), thus, positively impacting operating lifetime of such devices.

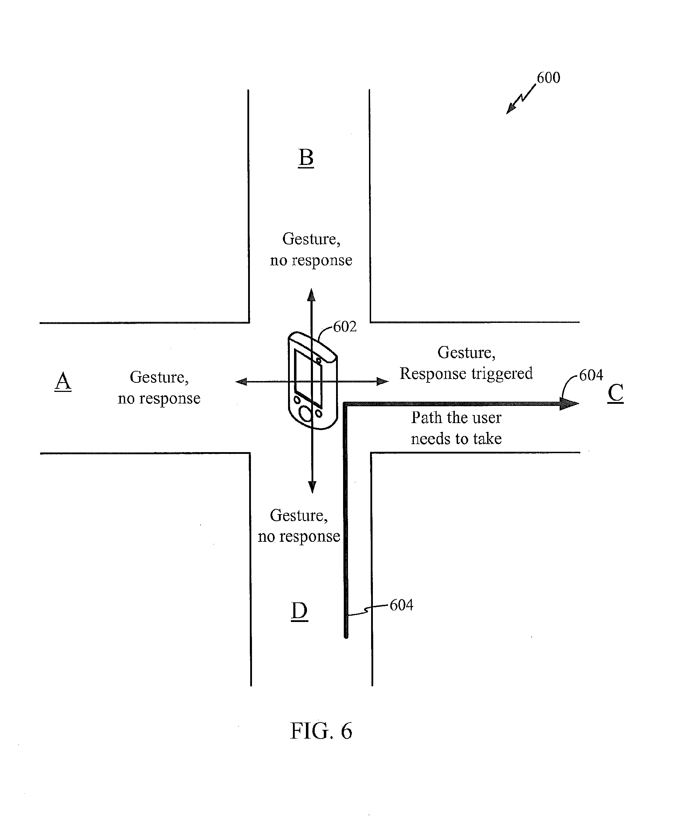

FIG. 6 is a schematic diagram illustrating a mobile device performing an example navigation operation using haptic feedback indications with respect to a pre-determined navigation route at an intersection 600, according to an implementation. In this illustrated example, a location-and-orientation-aware mobile device 602 may be programmed or otherwise provided with navigation information descriptive of a pre-determined navigation route 604 and may convey such information via navigation instructions using, at least in part, vibration, shaking, or other tactile indications, as previously mentioned. Here, for example, mobile device 602 may indicate the suggested direction of travel consistent with pre-determined navigation route 604 by communicating to a user, for example, whether to make a right turn at intersection 600. To illustrate, a user may hold a mobile device in his or her hand and may gesture or point the mobile device in different directions corresponding, for example, to various paths, roadways, etc., such as in directions of paths' A, B, C, or D, respectively, and may receive navigation instructions via haptic feedback indications.

As discussed above, an orientation of mobile device 602 or its direction of travel or heading may be detected or determined, at least in part, by one or more on-board sensors, such as, for example, a magnetic compass, accelerometer, magnetometer, or potentially a gyroscope performing respective measurement activities. With measurements from these one or more sensors, mobile device 602 may determine whether a user is pointing or gesturing in a direction corresponding to or substantially consistent with pre-determined navigation route 604. If so, mobile device 602 may, for example, vibrate or shake in some manner so as to convey or communicate to a user that the selected direction is correct, as schematically illustrated in FIG. 6. Optionally or alternatively, a mobile device may reside in contact with or against a user's body, such as, for example, in the user's hand or shirt pocket, thus, allowing the user to respond to tactile indications conveying navigation instructions in a fashion described above. For example, while approaching intersection 600, mobile device 602 may vibrate or shake in some manner, such as using left, right, etc. on-board vibration systems so as to indicate or instruct a user to make a turn to stay on pre-determined navigation route 604. Also, in one particular implementation, in addition to or instead of haptic feedback indications, a mobile device may provide an audible alert allowing a user to respond to navigation instructions appropriately. By way of example, a user may point or gesture in various directions at intersection 600 in a manner described above and may receive an alert, such as one-time buzzing or ringing indicating that a selected direction is correct, for example, or two-time buzzing or ringing indicating an incorrect direction. It should be noted that navigation instructions may also be conveyed using, for example, any suitable or desired voice-guided navigation technology, just to illustrate another possible implementation. Of course, such details relating to various non-map-based mobile interfaces are merely examples, and claimed subject matter is not limited in this regard.

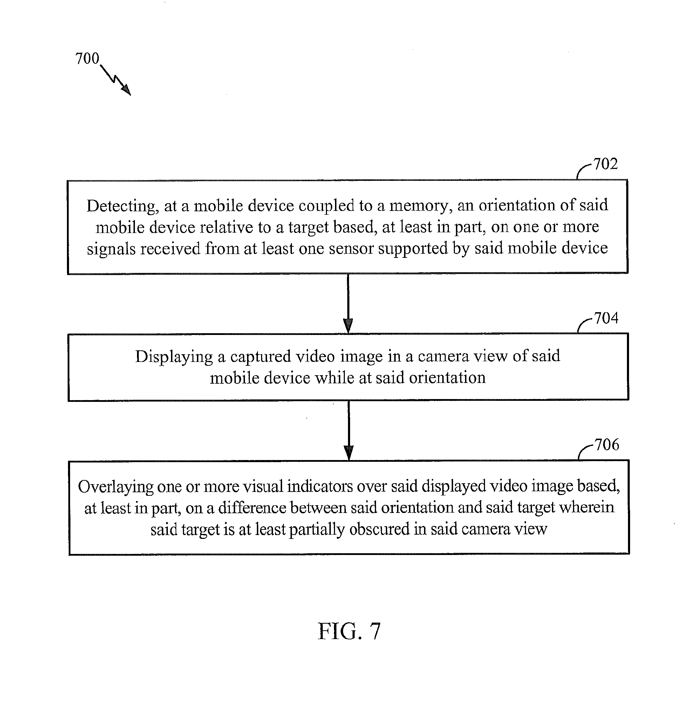

FIG. 7 is a flow diagram illustrating an implementation of an example process 700 for performing a navigation or positioning technique using, for example, a non-map-based location or routing interface associated with a mobile device. It should be appreciated that even though one or more operations are illustrated or described with respect to a certain sequence, other sequences including, for example, concurrent operations may also be employed. Example process 700 may begin at operation 702 with detecting, at a mobile device, an orientation of such a mobile device relative to a target based, at least in part, on one or more signals received from at least one sensor supported by the mobile device. As was indicated, an orientation of a mobile device may be detected, at least in part, using, for example, one or more on-board sensors, such as an accelerometer, tilt sensor, gyroscope, magnetic sensor, or other sensors capable of detecting an orientation or measuring various states of the mobile device. In one particular implementation, an orientation of a mobile device may be detected, at least in part, by a camera or video sensor associated with a three-dimensional camera utilizing, for example, an orientation vector(s) aligned with an optical axis of camera lens, though claimed subject matter is not so limited.

With regard to operation 704, a captured video image may be displayed in a camera view of a mobile device while at such an orientation. For example, a mobile device may include a camera or video sensor capable of capturing a video image for concurrent or real-time display of such an image in a suitable screen or display associated with the mobile device, just to illustrate one possible implementation. A user, thus, may place a mobile device in a certain orientation recognizable or detectable by one or more sensors and may, for example, scan the horizon or aim the mobile device in a suitable or desired direction(s) in order to locate a target. Accordingly, a mobile device may capture and concurrently display a live video image of a physical real-world environment, as previously mentioned.

At operation 706, a mobile device may, for example, overlay one or more visual indicators over a displayed video image based, at least in part, on a difference between a detected orientation and a target, which is at least partially obscured in such a camera view. For example, a mobile device may overlay one or more visual cues or indicators in a camera view in a manner sufficient to convey to a user where such a target is located, provide a user with target-related information, or the like. In one particular implementation, at least one of such one or more visual indicators may comprise, for example, a down arrow locating, identifying, etc. a target in a camera view in a suitable screen or display. As previously mentioned, one or more visual indicators may convey to a user a location of a target, even though such a target may, at times, be partially or substantially obscured by or hidden behind an obstacle or some object (e.g., a person, wall, etc.) in a camera view. A target may be labeled by a semi-transparent label, for example, which may include target-related information, such as a target's name, contact information, or the like. In certain implementations, one or more visual cues or indicators may comprise, for example, a double arrow indicating a direction in which a target is moving or traveling. In addition, one or more visual cues or indicators may comprise, for example, one or more triangle-shaped arrows directing user's scanning efforts or otherwise navigating a user toward a target's estimated location, etc., as was also indicated. It should also be noted that some or all of visual cues or indicators may be generated using 2D graphics. Optionally or alternatively, one or more cues or indicators may comprise, for example, 3D renderings capable of sufficiently conveying to a user a location of a target, target-related information, or the like.

FIG. 8 is a schematic diagram illustrating an example computing environment 800 that may include one or more networks or devices capable of partially or substantially implementing or supporting one or more processes for navigation or positioning operations or techniques using, for example, a non-map-based location or routing interface, in accordance with an example implementation.

Here, computing environment 800 may include, for example, various computing or communication resources capable of providing position or location information with regard to a mobile device 802 based, at least in part, on one or more wireless signals 804 associated with a particular SPS, location-based service (e.g., location server, etc.), or the like. Mobile device 802 may also be capable of communicating with one or more resources within a wireless communications network 806, for example, over one or more wireless communication links 808, as previously mentioned. Although not shown, optionally or alternatively, there may be additional devices, mobile or otherwise, communicatively coupled to network 806 to facilitate or otherwise support one or more processes associated with operating environment 800.

As illustrated, in certain example implementations, mobile device 802 may include, for example, a location-aware or tracking device realized herein as a navigation unit 810, though claimed subject matter is not so limited. Navigation unit 810 may comprise, for example, at least one receiver capable of receiving or processing one or more wireless signals (e.g., via a front-end circuit, back-end processor, etc.). In certain example implementations, one or more processing units 812 may be operatively coupled to navigation unit 810 and may be capable of acquiring or providing all or part of location or position information (e.g., via trilateration, heat map signature matching, etc.) in support of one or more processes in response to specific instructions, which may be stored in memory 814, for example, along with one or more location information, heat map values, or other like information.

Memory 814 may represent any suitable or desired information storage medium. For example, memory 814 may include a primary memory 816 and a secondary memory 818. Primary memory 816 may include, for example, a random access memory, read only memory, etc. While illustrated in this example as being separate from processing unit(s) 812, it should be appreciated that all or part of primary memory 816 may be provided within or otherwise co-located/coupled with processing unit(s) 812.

Secondary memory 818 may include, for example, the same or similar type of memory as primary memory or one or more information storage devices or systems, such as, for example, a disk drive, an optical disc drive, a tape drive, a solid state memory drive, etc. In certain implementations, secondary memory 818 may be operatively receptive of, or otherwise enabled to be coupled to, a computer-readable medium 820. Computer-readable medium 820 may include, for example, any medium that can store or provide access to information, code or instructions (e.g., an article of manufacture, etc.) for one or more devices associated with operating environment 800.

Computer-readable medium 820 may be provided or accessed by processing unit(s) 812, for example. As such, in certain example implementations, the methods or apparatuses may take the form, in whole or part, of a computer-readable medium that may include computer-implementable instructions stored thereon, which, if executed by at least one processing unit or other like circuitry, may enable processing unit(s) 812 or the other like circuitry to perform all or portions of a location determination processes, sensor-based or sensor-supported measurements (e.g., acceleration, deceleration, orientation, tilt, rotation, etc.) or any like processes to facilitate or otherwise support non-map-based navigation with respect to one or more mobile devices, such as mobile device 802. In certain example implementations, processing unit(s) 812 may be capable of performing or supporting other functions, such as communication, etc.

Processing unit(s) 812 may be implemented in hardware or a combination of hardware and software. Processing unit(s) 812 may be representative of one or more circuits configurable to perform at least a portion of information computing technique or process. By way of example but not limitation, processing unit(s) 812 may include one or more processors, controllers, microprocessors, microcontrollers, application specific integrated circuits, digital signal processors, programmable logic devices, field programmable gate arrays, and the like, or any combination thereof.

Mobile device 802 may include various components or circuitry, such as, for example, a power source 822, an accelerometer 824, a video sensor 826, a magnetic compass 828, a gyroscope 830, or various other sensors 832, to facilitate or otherwise support one or more processes associated with operating environment 800, as previously described. For example, such sensors may provide analog or digital signals to processing unit(s) 812. Although not shown, it should be noted that mobile device 802 may include an analog-to-digital converter (ADC) for digitizing analog signals from one or more sensors. Optionally or alternatively, such sensors may include a designated (e.g., an internal, etc.) ADC(s) to digitize respective output signals, although claimed subject matter is not so limited. Power source 822 may provide power to some or all of the components or circuitry of mobile device 802. Power source 822 may be a portable power source, such as a battery, for example, or may comprise a fixed power source, such as an outlet (e.g. in a house, electric charging station, car, etc.). It should be appreciated that power source 822 may be integrated into (e.g., built-in, etc.) or otherwise supported by (e.g., stand-alone, etc.) mobile device 802.

Mobile device 802 may include one or more connections 834 (e.g., buses, lines, conductors, optic fibers, etc.) to operatively couple various circuits together, and a user interface 836 (e.g., display, touch screen, keypad, buttons, knobs, microphone, speaker, trackball, data port, etc.) to receive user input, facilitate or support sensor-related signal measurements (e.g., from video sensor, etc.), or provide information to a user. Mobile device 802 may further include a communication interface 838 (e.g., wireless transceiver, modem, antenna, etc.) to allow for communication with one or more other devices or systems (e.g., peer-to-peer, etc.) over one or more wireless communication links such as, for example, communication link 112 of Fig. 1.

Methodologies described herein may be implemented by various means depending upon applications according to particular features or examples. For example, such methodologies may be implemented in hardware, firmware, software, discrete/fixed logic circuitry, any combination thereof, and so forth. In a hardware or logic circuitry implementation, for example, a processing unit may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other devices or units designed to perform the functions described herein, or combinations thereof, just to name a few examples.

For a firmware or software implementation, the methodologies may be implemented with modules (e.g., procedures, functions, etc.) having instructions that perform the functions described herein. Any machine readable medium tangibly embodying instructions may be used in implementing the methodologies described herein. For example, software codes may be stored in a memory and executed by a processor. Memory may be implemented within the processor or external to the processor. As used herein the term "memory" refers to any type of long term, short term, volatile, nonvolatile, or other memory and is not to be limited to any particular type of memory or number of memories, or type of media upon which memory is stored. In at least some implementations, one or more portions of the herein described storage media may store signals representative of data or information as expressed by a particular state of the storage media. For example, an electronic signal representative of data or information may be "stored" in a portion of the storage media (e.g., memory) by affecting or changing the state of such portions of the storage media to represent data or information as binary information (e.g., ones and zeros). As such, in a particular implementation, such a change of state of the portion of the storage media to store a signal representative of data or information constitutes a transformation of storage media to a different state or thing.

As was indicated, in one or more example implementations, the functions described may be implemented in hardware, software, firmware, discrete/fixed logic circuitry, some combination thereof, and so forth. If implemented in software, the functions may be stored on a physical computer-readable medium as one or more instructions or code. Computer-readable media include physical computer storage media. A storage medium may be any available physical medium that can be accessed by a computer. By way of example, and not limitation, such computer-readable media can comprise RAM, ROM, EEPROM, CD-ROM or other optical disc storage, magnetic disk storage or other magnetic storage devices, or any other medium that can be used to store desired program code in the form of instructions or data structures and that can be accessed by a computer or processor thereof. Disk and disc, as used herein, includes compact disc (CD), laser disc, optical disc, digital versatile disc (DVD), floppy disk and blue-ray disc where disks usually reproduce data magnetically, while discs reproduce data optically with lasers.

Wireless communication techniques described herein may be implemented using various wireless communication networks such as a wireless wide area network (WWAN), a wireless local area network (WLAN),a wireless personal area network (WPAN), and so on. The term "network" and "system" may be used interchangeably herein. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as cdma2000, Wideband-CDMA (W-CDMA), Time Division Synchronous Code Division Multiple Access (TD-SCDMA), to name just a few radio technologies. Here, cdma2000 may include technologies implemented according to IS-95, IS-2000, and IS-856 standards. A TDMA network may implement Global System for Mobile Communications (GSM), Digital Advanced Mobile Phone System (D-AMPS), or some other RAT. GSM and W-CDMA are described in documents from a consortium named "3rdGeneration Partnership Project" (3GPP). Cdma2000 is described in documents from a consortium named "3rd Generation Partnership Project 2"(3GPP2). 3GPP and 3GPP2 documents are publicly available. A WLAN may include an IEEE 802.11x network, and a WPAN may include a Bluetooth network, an IEEE 802.15x, for example. Wireless communication networks may include so-called next generation technologies (e.g., "4G"), such as, for example, Long Term Evolution (LTE), Advanced LTE, WiMAX, Ultra Mobile Broadband (UMB), or the like.

Also, computer instructions/code/data may be transmitted via signals over physical transmission media from a transmitter to a receiver (e.g., via electrical digital signals). For example, software may be transmitted from a website, server, or other remote source using a coaxial cable, fiber optic cable, twisted pair, digital subscriber line (DSL), or physical components of wireless technologies such as infrared, radio, and microwave. Combinations of the above may also be included within the scope of physical transmission media. Such computer instructions or data may be transmitted in portions (e.g., first and second portions) at different times (e.g., at first and second times).Some portions of this Detailed Description are presented in terms of algorithms or symbolic representations of operations on binary digital signals stored within a memory of a specific apparatus or special purpose computing device or platform. In the context of this particular Specification, the term specific apparatus or the like includes a general purpose computer once it is programmed to perform particular functions pursuant to instructions from program software. Algorithmic descriptions or symbolic representations are examples of techniques used by those of ordinary skill in the signal processing or related arts to convey the substance of their work to others skilled in the art. An algorithm is here, and generally, considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared, or otherwise manipulated.

It has proven convenient at times, principally for reasons of common usage, to refer to such signals as bits, data, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussions utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend at least in part upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures or characteristics. Though, it should be noted that this is merely an illustrative example and claimed subject matter is not limited to this example.

While certain example techniques have been described and shown herein using various methods or systems, it should be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to particular examples disclosed, but that such claimed subject matter may also include all implementations falling within the scope of the appended claims, and equivalents thereof.

### FURTHER SUMMARY OF THE INVENTION

1. A method, comprising:
   detecting, at a mobile device, an orientation of said mobile device relative to a target based, at least in part, on one or more signals received from at least one sensor supported by said mobile device;
   displaying a captured video image in a camera view of said mobile device while at said orientation; and
   overlaying one or more visual indicators over said displayed video image based, at least in part, on a difference between said orientation and said target, wherein said target is at least partially obscured in said camera view.
2. The method of 1, wherein at least one of said one or more visual indicators comprises a down arrow indicating where said target is located.
3. The method of 2, wherein said down arrow is capable of directing a user to said target.
4. The method of 2, wherein said down arrow changes size based, at least in part, on a proximity of said mobile device to said target.
5. The method of 1, wherein at least one of said one or more visual indicators comprises a label providing target-related information.
6. The method of 5, wherein said target-related information comprises at least one of the following: an identity of said target; a description of said target; a location of said target; contact information with respect to said target; or any combination thereof.
7. The method of 5, wherein said target-related 'information comprises information in a video format providing at least one of the following:
   an identity of said target; a description of said target; a location of said target; contact information with respect to said target; or any combination thereof.
8. The method of 5, wherein said label is user-configurable.
9. The method of 1, wherein said at least one sensor comprises at least one of the following: an accelerometer; a tilt sensor; a magnetic compass; a video sensor; a gyroscope; a camera sensor; or any combination thereof.
10. The method of 1, wherein at least one of said one or more visual indicators comprises a double arrow indicating a direction in which said target is traveling in relation to said mobile device.
11. The method of 1, wherein at least one of said one or more visual indicators comprises a color-coded visual indicator with color-coding based, at least in part, on a direction in which said target is traveling.
12. The method of 1, wherein at least one of said one or more visual indicators comprises a triangle-shaped arrow indicating where said target is located.
13. The method of 12, wherein said triangle-shaped arrow changes size based, at least in part, on a proximity of said mobile device to said target.
14. The method of 1, wherein said one or more visual indicators comprises two triangle-shaped arrows displayed concurrently to indicate where said target is located.
15. A method, comprising:
   determining, at a mobile device, an orientation of said mobile device relative to a pre-determined navigation route; and
   providing a haptic feedback indication representative of a navigation instruction according to said pre-determined navigation route based, at least in part, on said determined orientation.
16. The method of 15, wherein said determining said orientation further comprises determining said orientation based, at least in part, on signals received from one or more inertial sensors on said mobile device.
17. The method of 15, wherein said haptic feedback indication comprises a vibration.
18. The method of 15, wherein said haptic feedback indication comprises a vibration in conjunction with at least one of the following: an audible alert, a visual alert; or any combination thereof.
19. The method of 15, and further comprising:
   sensing a direction of a gesture relative to said pre-determined navigation path based, at least in part, on one or more signals received from one or more inertial sensors on said mobile device; and
   selectively providing a haptic feedback indication to said sensed gesture if said direction is substantially on said pre-determined navigation route.
20. A method comprising:
   determining, at a mobile device, a direction of travel of said mobile device relative to a target; and
   providing a color shown in a display of said mobile device indicative of a closeness of said direction of travel to said target.
21. The method of 20, wherein said target comprises at least one of the following: an object of interest to be located; an area of interest to be located; a pre-determined navigation route; a destination point identifiable over a digital map; or any combination thereof.
22. An apparatus comprising:
   a mobile device comprising a computing platform coupled to a memory to:
      detect, at said mobile device, an orientation of said mobile device relative to a target based, at least in part, on one or more signals received from at least one sensor supported by said mobile device;
      display a captured video image in a camera view of said mobile device while at said orientation; and
      overlay one or more visual indicators over said displayed video image based, at least in part, on a difference between said orientation and said target, wherein said target is at least partially obscured in said camera view.
23. The apparatus of 22, and further comprising:
   a receiver to receive one or more wireless signals from at least one wireless communications system.
24. The apparatus of 22, wherein at least one of said one or more visual indicators comprises a down arrow indicating where said target is located.
25. The apparatus of 24, wherein said down arrow is capable of directing a user to said target.
26. The apparatus of 24, wherein said down arrow changes size based, at least in part, on a proximity of said mobile device to said target.
27. The apparatus of 22, wherein at least one of said one or more visual indicators comprises a label providing target-related information.
28. The apparatus of 22, wherein at least one of said one or more visual indicators comprises a double arrow indicating a direction in which said target is traveling.
29. The apparatus of 22, wherein at least one of said one or more visual indicators comprises a color-coded visual indicator with color-coding based, at least in part, on a direction in which said target is traveling.
30. The apparatus of 22, wherein at least one of said one or more visual indicators comprises a triangle-shaped arrow indicating where said target is located.
31. The apparatus of 30, wherein said triangle-shaped arrow changes size based, at least in part, on a proximity of said mobile device to said target.
32. The apparatus of 22, wherein said one or more visual indicators comprises two triangle-shaped arrows displayed concurrently to indicate where said target is located.
33. An apparatus comprising:
   means for detecting, at a mobile device, an orientation of said mobile device relative to a target based, at least in part, on one or more signals received from at least one sensor supported by said mobile device;
   means for displaying a captured video image in a camera view of said mobile device while at said orientation; and
   means for overlaying one or more visual indicators over said displayed video image based, at least in part, on a difference between said orientation and said target, wherein said target is at least partially obscured in said camera view.
34. The apparatus of 33, wherein at least one of said one or more visual indicators comprises a down arrow indicating where said target is located.
35. The apparatus of 34, wherein said down arrow is capable of directing a user to said target.
36. The apparatus of 34, wherein said down arrow changes size based, at least in part, on a proximity of said mobile device to said target.
37. The apparatus of 33, wherein at least one of said one or more visual indicators comprises a label providing target-related information
38. The apparatus of 33, wherein at least one of said one or more visual indicators comprises a double arrow indicating a direction in which said target is traveling.
39. The apparatus of 33, wherein at least one of said one or more visual indicators comprises a color-coded visual indicator with color-coding based, at least in part, on a direction in which said target is traveling.
40. The apparatus of 33, wherein at least one of said one or more visual indicators comprises a triangle-shaped arrow indicating where said target is located.
41. The apparatus of 40, wherein said triangle-shaped arrow changes size based, at least in part, on a proximity of said mobile device to said target.
42. The apparatus of 33, wherein said one or more visual indicators comprises two triangle-shaped arrows displayed concurrently to indicate where said target is located.
43. An article comprising:
   a storage medium having instructions stored thereon executable by a special purpose computing platform to:
      detect, at a mobile device, an orientation of said mobile device relative to a target based, at least in part, on one or more signals received from at least one sensor supported by said mobile device;
      display a captured video image in a camera view of said mobile device while at said orientation; and
      overlay one or more visual indicators over said displayed video image based, at least in part, on a difference between said orientation and said target, wherein said target is at least partially obscured in said camera view.
44. The article of 43, wherein at least one of said one or more visual indicators comprises a down arrow indicating where said target is located.
45. The article of 44, wherein said down arrow is capable of directing a user to said target.
46. The article of 44, wherein said down arrow changes size based, at least in part, on a proximity of said mobile device to said target.
47. The article of 43, wherein at least one of said one or more visual indicators comprises a label providing target-related information.
48. The article of 43, wherein at least one of said one or more visual indicators comprises a double arrow indicating a direction in which said target is traveling.
49. The article of 43, wherein at least one of said one or more visual indicators comprises a color-coded visual indicator with color-coding based, at least in part, on a direction in which said target is traveling.
50. The article of 43, wherein at least one of said one or more visual indicators comprises a triangle-shaped arrow indicating where said target is located.
51. The article of 50, wherein said triangle-shaped arrow changes size based, at least in part, on a proximity of said mobile device to said target.
52. The article of 43, wherein said one or more visual indicators comprises two triangle-shaped arrows displayed concurrently to indicate where said target is located.

## Claims

1. A method, comprising:
determining, at a mobile device, an orientation of said mobile device relative to a pre-determined navigation route; and
providing a haptic feedback indication representative of a navigation instruction according to said pre-determined navigation route based, at least in part, on said determined orientation.

2. The method of claim 1, wherein said determining said orientation further comprises determining said orientation based, at least in part, on signals received from one or more inertial sensors on said mobile device.

3. The method of claim 1, wherein said haptic feedback indication comprises a vibration.

4. The method of claim 1, wherein said haptic feedback indication comprises a vibration in conjunction with at least one of the following: an audible alert, a visual alert; or any combination thereof.

5. The method of claim 1, and further comprising:
sensing a direction of a gesture relative to said pre-determined navigation path based, at least in part, on one or more signals received from one or more inertial sensors on said mobile device; and
selectively providing a haptic feedback indication to said sensed gesture if said direction is substantially on said pre-determined navigation route.

6. A method comprising:
determining, at a mobile device, a direction of travel of said mobile device relative to a target; and
providing a color shown in a display of said mobile device indicative of a closeness of said direction of travel to said target.

7. The method of claim 6, wherein said target comprises at least one of the following: an object of interest to be located; an area of interest to be located; a pre-determined navigation route; a destination point identifiable over a digital map; or any combination thereof.

8. An apparatus comprising means for carrying out the method of any one of claims 1 to 5 or 6 to 7.

9. A computer-readable medium comprising instructions stored thereon, when executed by a processor cause the processor to perform the method of any one of claims 1 to 5 or 6 to 7.
